(19)

Europäisches Patentamt
European Patent Office
Office européen des brevets

(11) **EP 4 772 902 A1**

(12) **EUROPEAN PATENT APPLICATION**

(43) Date of publication:
08.07.2026  Bulletin 2026/28

(21) Application number: 25221735.1

(22) Date of filing: **09.12.2025**

(51) International Patent Classification (IPC):
**G01S 5/02** (2010.01)      **G01S 5/14** (2006.01)
**G01S 5/16** (2006.01)      **G01S 5/30** (2006.01)

(52) Cooperative Patent Classification (CPC):
**G01S 5/14; G01S 5/0205;** G01S 5/0218;
G01S 5/0244; G01S 5/16; G01S 5/30

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **23.12.2024  FI 20246548**

(71) Applicant: **Nokia Solutions and Networks Oy
02610 Espoo (FI)**

(72) Inventors:
• **ABRUDAN, Traian**
  **Espoo (FI)**
• **KOLMONEN, Veli-Matti**
  **Espoo (FI)**

(74) Representative: **Nokia EPO representatives
Nokia Technologies Oy
Karakaari 7
02610 Espoo (FI)**

(54) **POSITION DETERMINATION USING ITERATIVE REDUCTION OF NUMBER OF RANGES**

(57)     The present subject matter relates to a method for determining a position of a device using a set of anchor nodes comprising: providing a set of initial ranges in time or space between the set of anchor nodes and the device; executing one or more times a position determination operation, the position determination operation comprising: determining a first set of initial ranges; estimating a first position of the device using the first set of initial ranges; estimating a second position of the device using a second set of initial ranges; providing either the first position or the second position as the device's position based on fulfillment of an estimation position improvement criterion; wherein the second set of initial ranges is the first set of initial ranges being reduced by one initial range, wherein the position determination operation is executed until the provision of the position.

Fig. 3

EP 4 772 902 A1

## Description

### TECHNICAL FIELD

Various example embodiments relate to positioning systems, and more particularly to an apparatus for determining the position of a device using a set of anchor nodes.

### BACKGROUND

Accurate positioning has become essential for a wide range of applications, including tracking assets, navigating in industrial environments, and ensuring operational efficiency. While outdoor positioning may be reliably achieved using satellite-based systems, indoor environments pose significant challenges due to factors such as multipath effects and non-line-of-sight (NLOS) conditions. These challenges often lead to inaccurate measurements, known as outliers, which can degrade positioning accuracy if not properly addressed.

### SUMMARY

Example embodiments provide an apparatus for determining a position of a device using a set of nodes, referred to as anchor nodes, the apparatus comprising at least one processor; and at least one memory storing instructions that, when executed by the at least one processor, cause the apparatus to: provide a set of initial ranges in time or space between the set of anchor nodes and the device; execute one or more times a position determination operation, the position determination operation comprising: determining a first set of initial ranges; estimating a first position of the device using the first set of initial ranges and positions of the corresponding anchor nodes; estimating a second position of the device using a second set of initial ranges and positions of the corresponding anchor nodes; providing either the first position or the second position as the device's position based on fulfillment of an estimation position improvement criterion; wherein the second set of initial ranges is the first set of initial ranges with a predefined reduction in the number of initial ranges; the predefined reduction being a removal of one initial range, wherein the first set of initial ranges is the set of initial ranges in the initial execution of the position determination operation or otherwise is the second set of initial ranges of a last execution of the position determination operation; wherein the position determination operation is executed until the provision of the position.

Example embodiments provide a method for determining a position of a device using a set of nodes, referred to as anchor nodes, the method comprising: providing a set of initial ranges in time or space between the set of anchor nodes and the device; executing one or more times a position determination operation, the position determination operation comprising: determining a first set of initial ranges; estimating a first position of the device using the first set of initial ranges and positions of the corresponding anchor nodes; estimating a second position of the device using a second set of initial ranges and positions of the corresponding anchor nodes; providing either the first position or the second position as the device's position based on fulfillment of an estimation position improvement criterion; wherein the second set of initial ranges is the first set of initial ranges with a predefined reduction in the number of initial ranges; the predefined reduction being a removal of one initial range, wherein the first set of initial ranges is the set of initial ranges in the initial execution of the position determination operation or otherwise is the second set of initial ranges of a last execution of the position determination operation; wherein the position determination operation is executed until the provision of the position.

Example embodiments provide a computer program product comprising processor executable instructions for causing an apparatus for performing at least the method.

Example embodiments provide a non-transitory computer readable medium comprising program instructions that, when executed by an apparatus, cause the apparatus to perform at least the method.

"First," "Second," etc. as used herein, these terms are used as labels for nouns that they precede, and do not imply any type of ordering (e.g., spatial, temporal, logical) unless explicitly defined as such.

### BRIEF DESCRIPTION OF THE DRAWINGS

The accompanying figures are included to provide a further understanding of examples, and are incorporated in and constitute part of this specification. In the figures:

FIG. 1 is a block diagram illustrating an example radio access network in accordance with an example of the present subject matter;

FIG. 2 is a diagram illustrating a set of anchor nodes and device for determining a position of the device in accordance with an example of the present subject matter;

FIG. 3 is a process flowchart illustrating a method for determining a position of a device according to an example of the present subject matter;

FIG. 4 is a diagram illustrating a method for determining a position of a device in accordance with an example of the present subject matter; and

FIG. 5 is a block diagram illustrating an example apparatus according to the present subject matter.

## DETAILED DESCRIPTION

In the following description, for purposes of explanation and not limitation, specific details are set forth such as particular architectures, interfaces, techniques, etc., in order to provide a thorough understanding of the examples. However, it will be apparent to those skilled in the art that the disclosed subject matter may be practiced in other illustrative examples that depart from these specific details. In some instances, detailed descriptions of well-known devices and/or methods are omitted so as not to obscure the description with unnecessary detail.

The present subject matter may provide a robust approach for improving positioning accuracy by systematically detecting and removing outlier measurements, which may be critical in challenging environments such as indoor factories. Indeed, positioning may often face significant challenges due to multipath and NLOS propagation, which may cause timing estimates to deviate substantially from expected values, resulting in outlier measurements. The present subject matter may address these challenges by iteratively refining position estimates while eliminating unreliable data. By doing so, the present subject matter may ensure that only the most reliable measurements contribute to the final position estimate. This approach may particularly be beneficial as advancements in systems such as communication systems enable higher resolution measurements, allowing the method to fully leverage this precision while mitigating the adverse effects of environmental factors. This may make it highly suitable for applications requiring accurate positioning in complex indoor environments, such as tracking, navigation, and industrial operations.

An apparatus may be provided. The apparatus may be configured to determine a position of a device using a set of nodes. The set of nodes may be referred to as set of anchor nodes for naming purposes. The set of anchor nodes may be characterized by their known positions, either in time or space. The set of anchor nodes may serve as fixed reference points, enabling the apparatus to determine the device's position relative to them. The set of anchor nodes may comprise a number of nodes greater than or equal to a minimum number, where the minimum number may correspond to the smallest number of anchor nodes necessary to determine the position of the device. This minimum number may depend on factors such as the dimensionality of the environment (e.g., two-dimensional or three-dimensional positioning) and the positioning method used (e.g., trilateration, multilateration).

The apparatus may be a node of the set of anchor nodes, the device or another apparatus that is configured to communicate with the set of anchor nodes and the device. If the apparatus is not part of the set of anchor nodes or the device, the apparatus may, for example, be a server hosted in a cloud environment or another centralized processing unit capable of managing and processing the data received from the set of anchor nodes and the device for position determination.

The apparatus may be configured to provide a set of initial ranges in time or space between the set of anchor nodes and the device. Each initial range of the set of initial ranges may refer to a distance or delay between the device and the corresponding anchor node of the set of anchor nodes. For example, if L is the number of anchor nodes in the set of anchor nodes, the set of initial ranges may comprise L initial ranges, where each initial range corresponds to the distance between the device and a respective anchor node in the set of anchor nodes. The initial range may be represented in different forms. The initial range may be a range in time, typically expressed as the time it takes for a signal to propagate between the device and the anchor node. Alternatively, the initial range may be a range in space, representing a distance between the device and the corresponding anchor node. For example, if the signal propagation time to each anchor node is measured, the range may be estimated by multiplying the time by the speed of light. The set of initial ranges may provide a baseline for estimating the device's position.

The apparatus may be configured to execute one or more times a position determination operation. The position determination operation comprises: determining a first set of initial ranges, estimating a first position of the device using the first set of initial ranges and positions of the corresponding anchor nodes, estimating a second position of the device using a second set of initial ranges and positions of the corresponding anchor nodes, and providing either the first position or the second position as the device's position based on fulfillment of an estimation position improvement criterion. The second set of initial ranges is the first set of initial ranges with a predefined reduction in the number of initial ranges. The first set of initial ranges is the set of initial ranges in the initial execution of the position determination operation or otherwise is the second set of initial ranges of a last execution of the position determination operation. In one example, the predefined reduction is a removal of one initial range. That is, in each iteration of the position determination operation, the second set of initial ranges may be obtained from the first set of initial ranges by removing one range from the first set of initial ranges.

For example, during the initial execution of the position determination operation, the apparatus may be configured to determine the first set of initial ranges as the set of initial ranges. In each subsequent execution of the position determination operation, the apparatus may be configured to determine the first set of initial ranges as the second set of initial ranges from the most recent execution of the position determination operation. The first set of initial ranges may serve as the foundation for estimating the position, which may be further refined in subsequent iterations. The apparatus may be configured to use the first set of initial ranges, along with the known positions of the corresponding anchor nodes, to estimate the first position of the device. This estimation preceded with the operation of the determination of the first set of initial ranges may be referred to as first position estimation operation. For example, if the first set of initial ranges includes L ranges, the corresponding anchor nodes are L nodes from the set of anchor nodes, where each anchor node has a respective initial range between it and the device in the first set of initial ranges.

The apparatus may be configured to estimate the second position of the device using a reduced set of initial ranges derived from the first set initial ranges. This may be referred to as a second position estimation operation. For example, if the first set of initial ranges includes ranges between five nodes and the device, the second set of initial ranges might exclude one range and include only four ranges. By recalculating the device's position with fewer ranges, the apparatus may identify and mitigate the effects of unreliable measurements, leading to a potentially improved position estimate. The second set of initial ranges may be obtained by systematically reducing the number of initial ranges in the first set of initial ranges by one node. This targeted reduction may help identify and exclude potentially unreliable or noisy ranges. Additionally, it may simplify the iterative process by limiting the number of possible subsets that would otherwise need to be generated if higher numbers of reductions or all possible combinations were considered, thereby reducing computational complexity.

In each execution or iteration of the position determination operation, the apparatus may determine whether to provide the first or second position based on the fulfillment of the predefined estimation position improvement criterion. This process may be referred to as the assessment operation. The assessment operation may or may not lead to the provision of a position for the device. If the assessment operation in a given iteration of the position determination operation does not result in the provision of either position, the position determination operation may, for example, be executed again.

The apparatus may be configured to repeatedly execute the position determination operation until the execution of the assessment operation results in the provision of the device's position. For example, the apparatus may be configured to iteratively execute the position determination operation iteratively until a valid position is provided based on the estimation position improvement criterion.

Hence, once the set of initial ranges is provided, the apparatus may, for example, be configured to execute one or more iterations of the position determination operation using the set of initial ranges as input. Each execution of the position determination operation may comprise the execution of the first position estimation operation, the second position estimation operation and the assessment operation.

For example, consider a set of 10 initial ranges corresponding to 10 anchor nodes. In the first execution of the position determination operation, the first set of initial ranges may be all 10 nodes (i.e., the entire set of initial ranges), while the second set of initial ranges may include 9 ranges, formed by removing one range from the first set of initial ranges. In the second execution of the position determination operation (if it occurs), the first set of initial ranges may consist of the 9 ranges that formed the second set of the first execution, and the second set of initial ranges may then include 8 ranges, formed by removing one range from the first set of 9 initial ranges. This process may continue iteratively, reducing the number of ranges by one in the second set with each subsequent execution.

In one example, the set of initial ranges may be estimated using arrival times of signals received by the set of anchor nodes from the device. Alternatively, the set of initial ranges may be estimated using arrival times of signals received by the device from the set of anchor nodes. The present subject matter may thus be applied to scenarios where signals are either transmitted by the device and received by the set of anchor nodes, or where the set of anchor nodes, being synchronized, simultaneously transmit signals to the device for position estimation. The set of initial ranges may, for example, be obtained using techniques such as time-of-arrival (TOA), Time Difference of Arrival (TDOA), or other positioning techniques. For example, depending on the signal-based method, the set of initial ranges may be provided to the apparatus either by the set of anchor nodes or by the device, particularly if the apparatus is neither the device nor part of the set of anchor nodes. If the apparatus is one of the set of anchor nodes, it may receive the initial ranges of the remaining anchor nodes directly from those anchor nodes or alternatively receive the entire set of initial ranges from the device. Conversely, if the apparatus is the device itself, it may have direct access to the set of initial ranges through the signals it receives or may obtain the set of initial ranges from the set of anchor nodes. Alternatively, the set of initial ranges may be estimated using techniques, such as physical measurements (e.g., from floor plans or maps), or based on fixed geometric arrangements where the positions of the device and anchor nodes are constrained by known structures or boundaries. These techniques may be useful in scenarios where signal-based methods may be impractical, such as in controlled environments. This may particularly be advantageous as the set of initial ranges may not need to be highly precise, as the iterative processes employed during position determination may refine and improve the accuracy of the ranges and the estimated positions over multiple iterations. Hence, depending on the method used to provide the set of initial ranges, the apparatus may be configured to provide the set of initial ranges either by obtaining the set of initial ranges e.g., from the set of anchor nodes or from the device or by estimating the set of initial ranges, such as by deriving the ranges from arrival times of signals.

In one example, the apparatus may be configured to determine the position of the device using the set of anchor nodes and the device, which may operate in either a wireless communication system, an acoustic positioning system, or another positioning system having nodes that may communicate with the device through signals. These signals may include radio frequency signals in wireless communication systems, acoustic signals in acoustic positioning systems, or optical signals in systems using light-based positioning. In the case of a wireless communication system, the set of anchor nodes and the device may belong to the system and may be configured to exchange radio frequency signals for position determination. The signals may be reference positioning signals such as Sound Reference Signals (SRSs) and Positioning Reference Signals (PRSs). Alternatively, in an acoustic positioning system, the set of anchor nodes and the device may belong to the acoustic system and may exchange sound signals, such as ultrasonic or audible signals, for position determination. The choice of system may depend on the application context, such as indoor localization using radio frequency signals or underwater positioning using acoustic signals. In these cases, the apparatus may process the exchanged signals to determine the set of initial ranges.

The wireless communication system comprises nodes such as base stations, wherein each node may serve devices located within the node's geographical area of service. The wireless communication system may support one or more radio access technologies (RATs). A radio access technology of the radio access technologies may, for example, be evolved universal terrestrial radio access (E-UTRA), Fifth-generation wireless networks (5G) new radio (NR), or a Sixth-generation wireless networks (6G) based system, but it is not limited to, as a person skilled in the art may apply the present subject matter to other wireless communication systems provided with necessary properties. The device may refer to an equipment that connects to and communicates with the wireless communication system to access services and applications provided by the wireless communication system. The device may, for example, be a user equipment. The device may, for example, comprise any one of: a mobile phone, a tablet, an Internet of things (IoT) device, or a laptop.

The present subject matter may provide advantageous implementation examples for the assessment operation so the assessment operation can adapt to varying requirements for ensuring flexibility across different positioning scenarios. In one example implementation of the assessment operation, the estimation position improvement criterion may include a stopping and a decision rule, ensuring that the fulfillment of the estimation position improvement criterion may directly result in the provision of a single determined position for the device. Specifically, the execution of the assessment operation may involve checking whether the estimation position improvement criterion is met, the outcome of which may directly determine the position to be provided. Alternatively, the estimation position improvement criterion may include a stopping rule, e.g., where the process halts upon satisfying the stopping rule, but the decision regarding the position to be provided may be performed based on an additional evaluation step or comparison performed after the stopping rule is met. Specifically, the execution of the assessment operation in this case may involve first checking whether the stopping rule is satisfied, which signals the end of iterative processing. Once the stopping rule is met, the additional evaluation step may, for example, compare the first and second positions of the current iteration, and the position with the most favorable evaluation may then be selected as the position to be provided. For example, in the case of the stopping rule, the process may terminate when a predefined threshold is met, such as when the residual error or deviation associated with the first position or second position falls below a specified value, or when the difference between the residuals of the two positions becomes negligible, indicating convergence. In the case of the decision rule, the position of the first and second positions with the smallest residual error or deviation may be selected. In another example, if a stopping rule, such as an insufficient number of ranges, is met for a current iteration and only the first position is determined for the current iteration, the apparatus may provide the first position of the current iteration. This separation of stopping and decision may allow for more flexibility, enabling further refinement or validation of the estimated position before it is finalized and provided as the output. Alternatively, the estimation position improvement criterion may consist of a first individual criterion applied to the first position estimation operation and a second individual criterion applied to the second position estimation operation. These individual criteria may be evaluated independently, with each being checked separately to ensure that specific conditions are met before proceeding. For example, the execution of the assessment operation may comprise: checking whether the first individual criterion is fulfilled for the first position estimation operation. In one example, only if this first individual criterion is not fulfilled does the process proceed to check whether the second individual criterion is fulfilled. In on example, the estimation position improvement criterion may be fulfilled if the first individual criterion is fulfilled and/or the second individual criterion is fulfilled. This sequential evaluation may ensure that each aspect of the position determination operation is validated step-by-step for greater flexibility and precision.

For example, the estimation position improvement criterion may comprise a condition based on a first metric assessed for the first position estimation operation and a second metric assessed for the second position estimation operation. The first metric may represent the improvement in accuracy achieved by the first position. The second metric may represent the improvement in accuracy achieved by the second position. The estimation position improvement criterion may involve a comparison of these first and second metrics, either individually or in combination, to decide which position to select or whether further iterations are needed.

In any of these implementation examples of the assessment operation, if the estimation position improvement criterion is fulfilled in the i-th iteration of the position determination operation, the provided position may be the first position determined in the i-th iteration or the second position determined in the i-th iteration.

In one example, the apparatus may be configured to receive an input set of initial ranges and assess whether it is sufficient to estimate a position. If the input set is insufficient, the apparatus may provide no solution. However, if the input set is deemed sufficient, it may serve as the set of initial ranges as described herein. In cases where no solution can be determined, the apparatus may be configured to request or derive a larger set of initial ranges, which may then be used as the set of initial ranges for position estimation.

According to one example, the estimation position improvement criterion is at least one of the following: first criterion: a deviation of at least part of the set of initial ranges, from a re-estimated set of initial ranges, when re-estimated using the second position, being smaller than a threshold, second criterion: a deviation of at least part of the set of initial ranges, from a re-estimated set of initial ranges, when re-estimated using the second position, being higher than a deviation of at least part of the set of initial ranges from a re-estimated set of initial ranges, when re-estimated using the first position, third criterion: a maximum number of iterations being reached, fourth criterion: the number of the set of initial ranges being smaller than a dimension of the second position plus two; or fifth criterion: the number of the set of initial ranges exceeding a threshold.

In the first criterion, the at least part of the set of initial ranges may be the entire set of initial ranges. Alternatively, the at least part of the set of initial ranges may be the first set of initial ranges allowing the criterion to be adaptable and tailored to each iteration of the position determination operation. The first criterion may, for example, be satisfied if the deviation between the set of initial ranges and a re-estimated set of initial ranges, when re-estimated using the second position, is smaller than a predefined threshold. The first criterion may ensure that the calculated position stabilizes to a consistent value by measuring how closely the re-estimated ranges align with the initial ranges. If the deviation falls below the threshold, it indicates that further refinements may be unnecessary, as the second position provides an accurate and reliable estimate. The advantage of this approach may be that it may avoid over-iterations, ensuring a stable and efficient convergence to a final position. For notation purpose, the set of initial ranges may, for example, be referred to as $\{\hat{r}\}^L$, where $L$ refers to the number of ranges in the set of initial ranges, where $\{\hat{r}\}^L$ may be represented as an array or another data structure, with its elements corresponding to the individual initial ranges in the set of initial ranges respectively. Assuming that the at least part of the set of initial ranges is the entire set of initial ranges, the re-estimated set of initial ranges may be referred to as $\{\hat{r}^{(0)}\}_i^{L_r}$ where the superscript (0) indicates that the first position is used to re-estimate the set of initial ranges, the subscript $i$ represents the $i$-th iteration of the position determination operation, for example, for the first execution of the position determination operation the subscript $i$ is equal to one, for the second execution of the position determination operation, the subscript $i$ is equal to two and so on, and $L_r$ refers to the number of ranges in the re-estimated set of initial ranges. $\{\hat{r}^{(0)}\}_i^{L_r}$ may be represented as an array or another data structure, with its elements corresponding to either the entire set of initial ranges (i.e., $L_r = L$) or a subset of them ($L_r < L$), depending on the specific method used to estimate the first and second positions. For example, if the method used to estimate the first and second positions relies on one of the initial ranges as a reference range, this reference range may not be included in the array $\{\hat{r}^{(0)}\}_i^{L_r}$. Instead, the array $\{\hat{r}^{(0)}\}_i^{L_r}$ may represent the remaining initial ranges excluding the reference range (i.e., $L_r = L - 1$). The deviation between the set of initial ranges $\{\hat{r}\}^L$ and a re-estimated set of initial ranges $\{\hat{r}^{(0)}\}_i^{L_r}$ may, for example, be represented by a value of the first metric. The first metric may quantify the difference between the corresponding elements of the two arrays $\{\hat{r}\}^L$ and $\{\hat{r}^{(0)}\}_i^{L_r}$. The first metric may, for example, be defined as function of the differences between the corresponding elements of $\{\hat{r}^{(0)}\}_i^{L_r}$ and $\{\hat{r}\}^L$ e.g. the first metric is $\propto \{\hat{r}^{(0)}\}_i^{L_r} - \{\hat{r}\}^L$. This may imply that the first metric may be derived based on the magnitude or statistical properties (e.g., sum, mean, or maximum) of these differences, capturing the deviation between the re-estimated set of initial ranges and the set of initial ranges. The difference between the two $l$-th elements of the two arrays may, for example, be referred to as $\{\hat{r}_l^{(0)}\}_i^{L_r} - \{\hat{r}_l\}^L$, where $l \in \{1, ..., L\}$ if $L_r = L$ or $l \in \{1, ..., L\} \setminus l_0$ if $L_r = L - 1$, where $l_0$ refers to the excluded range from the set of initial ranges. For instance, the first metric may be a residual error, calculated as the sum of squared differences between the elements of the two arrays, or a mean absolute deviation, which averages the absolute differences. Alternatively, the first metric may be a maximum deviation, capturing the largest single difference between corresponding elements, or another statistical measure designed to reflect the alignment between the initial and re-estimated ranges.

In the second criterion, the at least part of the set of initial ranges used with the first position may be the entire set of initial ranges or the first set of initial ranges. And the at least part of the set of initial ranges used with the second position may be the entire set of initial ranges or the second set of initial ranges. The second criterion may be satisfied if the deviation between the set of initial ranges and a re-estimated set of initial ranges, when re-estimated using the second position, is smaller than the deviation obtained when re-estimating the set of initial ranges using the first position. This second criterion may directly compare the quality of the first and second position estimates by evaluating which one produces a closer alignment with the initial ranges. By selecting the position with the smaller deviation, the apparatus may ensure that the most reliable and accurate estimate is used. The advantage of this method may be that it may systematically improve accuracy by prioritizing better-performing positions.

Assuming that the at least part of the set of initial ranges used with the first position is the entire set of initial ranges and the at least part of the set of initial ranges used with the second position may be the entire set of initial ranges, the re-estimated set of initial ranges using the second position may be referred to as $\{\hat{r}^{(1)}\}_i^{L_r}$ where the superscript (1) indicates that the first position is used to re-estimate the set of initial ranges, the subscript $i$ represents the $i$-th iteration of the position determination operation and $L_r$ refers to the number of ranges in re-estimated set of initial ranges. The deviation between the set of initial ranges $\{\hat{r}\}^L$ and a re-estimated set of initial ranges $\{\hat{r}^{(1)}\}_i^{L_r}$ may, for example, be represented by a value of the second metric. The second metric may quantify the difference between the corresponding elements of the two arrays $\{\hat{r}\}^L$ and $\{\hat{r}^{(1)}\}_i^{L_r}$. The second metric may quantify the difference between the corresponding elements of the two arrays $\{\hat{r}\}^L$ and $\{\hat{r}^{(1)}\}_i^{L_r}$. The second metric may, for example, be defined as function of the differences between the corresponding elements of $\{\hat{r}^{(1)}\}_i^{L_r}$ and $\{\hat{r}\}^L$ e.g. the second metric is $\{\hat{r}^{(1)}\}_i^{L_r} - \{\hat{r}\}^L$. This may imply that the second metric may be derived based on the magnitude or statistical properties (e.g., sum, mean, or maximum) of these differences, capturing the deviation between the re-estimated set of initial ranges and the set of initial ranges. The difference between the two $l$-th elements of the two arrays may, for example, be referred to as $\{\hat{r}_l^{(1)}\}_i^{L_r} - \{\hat{r}_l\}^L$, where $l \in \{1, \dots, L\}$ if $L_r = L$ or $l \in \{1, \dots, L\} \backslash l_{0_0}$ if $L_r = L - 1$, where $l_0$ refers to the excluded range from the first set of initial ranges. For instance, the second metric may represent a residual error, calculated as the sum of squared differences between the elements of the two arrays, or a mean absolute deviation, which averages the absolute differences. Alternatively, the second metric may be a maximum deviation, capturing the largest single difference between corresponding elements, or another statistical measure designed to reflect the alignment between the initial and re-estimated ranges.

The third criterion may be satisfied if the maximum number of iterations has been reached. The third criterion serves as a safeguard against excessive computations, ensuring that the iterative process terminates within a reasonable limit.

The fourth criterion may be satisfied if the number of ranges in the set of initial ranges or in the first set of initial ranges or in the second set of initial ranges is smaller than the dimension of the second position plus two. By tying the stopping condition to the number of available ranges relative to the dimensionality of the position, it may guarantee that the position estimate remains mathematically valid and reliable. The advantage of this approach may be that it improves computational efficiency while maintaining a sufficient level of accuracy.

The fifth criterion may be satisfied if the number of ranges in the set of initial ranges or in the first set of initial ranges or in the second set of initial ranges exceeds a predefined threshold. The fifth criterion may ensure that the number of ranges used for position estimation remains manageable and does not introduce unnecessary complexity. By capping the number of ranges, the apparatus may avoid processing redundant or excessive data, which could otherwise increase computational overhead without significant accuracy gains.

This example list of criteria may enable flexible and alternative implementations of the assessment operation, allowing for adaptability to different requirements and scenarios.

The estimation of each position of the first and second positions may be performed using an algorithm which may or may not rely on weights assigned to the set of initial ranges. The weights may be used in position estimation to adjust the influence of individual ranges based on their reliability or quality. Each initial range may be assigned a weight, where higher weights may emphasize more reliable data (e.g., strong signal quality or low noise), while lower weights may downplay less reliable or noisy measurements. These weights may be incorporated into the algorithm used to estimate the position such as Weighted Least Squares (WLS). The weights may be updated in each iteration based on deviations (residuals) between the initial ranges and the re-estimated ranges, which may be recalculated in each iteration, or based on other criteria such as signal quality, measurement consistency, or statistical metrics like signal-to-noise ratio (SNR).

Alternatively, the weights may be derived for update purpose from historical data or preconfigured thresholds that reflect prior knowledge of measurement reliability. This iterative updating process may allow the apparatus to adapt dynamically to changing data quality, ensuring that more reliable measurements are prioritized while minimizing the impact of noisy or inconsistent data, thereby improving the accuracy and robustness of the position estimation.

For example, the first position estimated in the i-th iteration may be referred to as $\{\hat{x}^{(0)}\}_i$ and the second position estimated in the i-th iteration may be referred to as $\{\hat{x}^{(1)}\}_i$. In the case where the method used to determine the first and second positions does not use weights adapted from one iteration to another, the estimation of the first position $\{\hat{x}^{(0)}\}_i$ in the i-th iteration (where $i > 1$, iteration beyond the first iteration) may comprise assigning the first position to be the estimated second position of the last iteration, that is, $\{\hat{x}^{(0)}\}_i = \{\hat{x}^{(1)}\}_{i-1}$. Meanwhile, the second position $\{\hat{x}^{(1)}\}_i$ may change from one iteration to the next due to the reduction in the number of ranges in the second set of initial ranges, requiring it to be newly estimated in each iteration. However, if the method used to determine the first and second positions does use weights adapted from one iteration to another, both the first position $\{x^{(0)}\}_i$ and the second position $\{\hat{x}^{(1)}\}_i$ are newly estimated in each iteration, as the weights influence the calculations and may be updated to reflect the changing reliability of the ranges. The first case may be advantageous because it may reduce computational complexity by reusing the second position from the previous iteration as the first position in the current iteration. Estimating the first position in each iteration, even when weights are not adapted, may ensure consistency, and allow the method to adapt to any changes in the input data, such as range adjustments or outlier exclusions. The second case, on the other hand, may ensure greater flexibility and accuracy since both positions are recalculated using updated weights, which adapt dynamically to changes in range reliability across iterations. This may make the method more robust in environments where measurement noise or errors vary significantly between iterations.

The present subject matter may provide advantageous implementation examples for the second position estimation operation to enhance flexibility and adaptability in range selection and position determination. In one example, the second set of initial ranges may be obtained from the first set of initial ranges by selecting a specific initial range from the first set of initial ranges and removing the selected range from the first set of initial ranges to form the second set of initial ranges. The selection of the specific initial range for removal may, for example, follow predefined criteria, such as prioritizing a range associated with lowest signal quality, weakest alignment with other ranges, or significant deviation from expected values. Alternatively, the selection may be performed randomly to ensure unbiased sampling.

According to one example, the apparatus may be configured to apply the predefined reduction in the number of initial ranges iteratively on the first set of initial ranges producing multiple candidate second sets of initial ranges, estimating a candidate second position of the device using each candidate second set of initial ranges and positions of the corresponding anchor nodes; selecting one of the candidate second sets of initial ranges using the estimated candidate second positions, wherein the estimated second position is the estimated candidate second position of the selected candidate second set of initial ranges, and the second set of initial ranges is the selected candidate second set of initial ranges. This may provide an example implementation of the second position estimation operation. This may create an iterative process that functions as an inner loop nested within the outer loop of the iterative execution of the position determination operation.

In one example, the iterative application of the predefined reduction may be performed as follows. The iterative application of the predefined reduction may be performed such to generate every distinct subset of the first set of initial ranges that satisfies the predefined reduction. For example, if the first set of initial ranges contains n ranges, subsets of sizes n - 1 are generated, covering all possible combinations of the initial ranges. For instance, from the first set of four initial ranges $\{\hat{r}_1, \hat{r}_2, \hat{r}_3, \hat{r}_4\}$, all four possible subsets of three initial ranges may be created: $\{\hat{r}_1, \hat{r}_2, \hat{r}_3\}$, $\{\hat{r}_1, \hat{r}_2, \hat{r}_4\}$, $\{\hat{r}_1, \hat{r}_3, \hat{r}_4\}$ and $\{\hat{r}_2, \hat{r}_3, \hat{r}_4\}$. These four subsets may be an example of the candidate second sets of initial ranges. This may ensure comprehensive coverage of all combinations, maximizing the likelihood of finding the most reliable subset for position estimation. Alternatively, the reduction process may generate a limited number of subsets based on predefined criteria or random sampling. For example, the first set of four initial ranges, $\{\hat{r}_1, \hat{r}_2, \hat{r}_3, \hat{r}_4\}$ might be reduced to only two subsets of the three initial ranges $\{\hat{r}_1, \hat{r}_2, \hat{r}_3\}$ and $\{\hat{r}_1, \hat{r}_2, \hat{r}_4\}$. These two subsets may be an example of the candidate second sets of initial ranges. This approach may be computationally efficient and adaptable, making it suitable when exhaustive evaluation is unnecessary.

For each candidate second set of initial ranges, the apparatus may be configured to estimate a corresponding candidate second position of the device using the known positions of the corresponding anchor nodes. Following the above example, the apparatus may calculate four candidate second positions for the fours subsets $\{\hat{r}_1, \hat{r}_2, \hat{r}_3\}$, $\{\hat{r}_1, \hat{r}_2, \hat{r}_4\}$, $\{\hat{r}_1, \hat{r}_3, \hat{r}_4\}$ and $\{\hat{r}_2, \hat{r}_3, \hat{r}_4\}$ respectively. For example, for the subset $\{\hat{r}_1, \hat{r}_2, \hat{r}_3\}$, the positions $p_1$, $p_2$, and $p_3$ of the anchor nodes associated with the ranges $\hat{r}_1$, $\hat{r}_2$, and $\hat{r}_3$ respectively and the ranges themselves may be used to determine the candidate second position of the device. This is because ranges $\hat{r}_1$, $\hat{r}_2$, and $\hat{r}_3$, in combination with positions $p_1$, $p_2$, and $p_3$ provide sufficient geometric information to calculate the device's position using techniques such as trilateration or similar position estimation algorithms.

The estimated candidate second positions may, for example, be evaluated to select the best-performing candidate second set of initial ranges. For example, a third metric may be evaluated for each of the estimated candidate second positions, and based on the values of this third metric, a decision may be made regarding which candidate second position, and consequently which candidate second set of initial ranges, to select.

In one example, the first metric, the second metric, and the third metric may either be the same or differ from one another. Hence, for each instance of position determination, a metric-whether the same or different-may be assigned to evaluate the impact of the position on the accuracy of the overall estimation process. This may allow flexibility in assessing the quality of each position instance, either by consistently using a single metric for comparison or by employing distinct metrics tailored to specific aspects of the evaluation. For example, the first and second metrics may be identical while the third metric differs, or all three metrics may be distinct, each focusing on a specific evaluation criterion, such as residual error, deviation, or geometric alignment. This flexibility may allow the apparatus to comprehensively assess and compare ranges, tailoring the evaluation to specific requirements or conditions of the positioning operation.

In the i-iteration of the position determination operation, the selected candidate second set of initial ranges becomes the finalized second set of initial ranges, and the corresponding candidate second position becomes the final second position for this iteration. This may ensure that the optimal subset of ranges and its resulting position estimate are carried forward for further refinement or finalization.

According to one example, the apparatus may be configured to select one of the candidate second sets of initial ranges whose candidate second position induces the smallest deviation of the set of initial ranges from a re-estimated set of initial ranges, when re-estimated using the candidate second position. For example, the third metric may represent this deviation. The third metric may be evaluated for each candidate second set of initial ranges and its associated candidate second position, and the resulting values may be compared to identify the value that represents the smallest deviation.

According to one example, the apparatus may be configured to select one of the candidate second sets of initial ranges by at least: for each candidate second set of initial ranges: re-estimating the candidate second set of initial ranges using the candidate second position and the positions of the corresponding anchor nodes, and computing a candidate second residual error indicating a difference between the second set of initial ranges and the corresponding re-estimated ranges, and selecting the candidate second set of second set of initial ranges associated with the smallest candidate second residual error. In this example, the third metric may be a residual error.

According to one example, the position determination operation comprises: re-estimating the first set of initial ranges using the first position and the positions of the corresponding anchor nodes, re-estimating the second set of initial ranges using the second position and the positions of the corresponding anchor nodes, wherein the estimation position improvement criterion is defined based on a first comparison between the first set of initial ranges and the re-estimated first set of initial ranges, and a second comparison between the second set of initial ranges and the re-estimated second set of initial ranges.

The first and second comparisons may form the basis for both decision and stopping rules of the estimation position improvement criterion. The first and second comparisons may, for example, comprise the evaluation of the first and second metrics respectively. Defining the estimation position improvement criterion by re-estimating the first and second sets of initial ranges in each iteration, based on their corresponding positions and anchor node positions, may be advantageous over directly computing deviations for the entire set of initial ranges. This may enable to focus on smaller subsets, to ensure a more targeted and precise evaluation, capturing the specific characteristics of the first and second positions while reducing the influence of irrelevant or noisy data from the complete set. This iterative refinement may facilitate progressive improvements in accuracy and reliability.

According to one example, the first comparison comprises computing a first deviation such as first residual error indicating a difference between the first set of initial ranges and the re-estimated first set of initial ranges; wherein the second comparison comprises computing a second deviation such as a second residual error indicating a difference between the second set of initial ranges and the re-estimated second set of initial ranges, the estimation position improvement criterion is a selection of the position associated with a minimized residual error. The estimation position improvement criterion, in this case, may be defined as the selection of the position associated with the minimized residual error, ensuring that the most reliable and accurate position is chosen based on the alignment between the original and re-estimated ranges.

Following, the above notation, the first set of initial ranges may be referred to as $\{\hat{r}\}^{L1}$, where $L^1$ refers to the number of ranges in the first set of initial ranges, where $\{\hat{r}\}^{L1}$ may be represented as an array or another data structure, with its elements corresponding to the individual initial ranges in the first set of initial ranges respectively. The re-estimated first set of initial ranges may be referred to as $\left\{\hat{r}^{(0)}\right\}_i^{L_r^1}$ where the superscript (0) indicates that the first position is used to re-estimate the first set of initial ranges, the subscript $i$ represents the $i$-th iteration of the position determination operation, and $L_r^1$ refers to the number of ranges in the re-estimated first set of initial ranges, where $L_r^1 \leq L^1$. The first deviation $\Delta_1$

may for example be defined as function of the differences between the corresponding elements of $\{\hat{r}^{(0)}\}_i^{L_r^1}$ and $\{\hat{r}\}^{L^1}$ e.g.

$\Delta_1 \propto \{\hat{r}^{(0)}\}_i^{L_r^1} - \{\hat{r}\}^{L^1}$. This may imply that the first deviation $\Delta_1$ may be derived based on the magnitude or statistical properties (e.g., sum, mean, or maximum) of these differences, capturing the deviation between the re-estimated first set of initial ranges and the first set of initial ranges. The exact proportionality may depend on the specific metric or weighting applied to the differences.

Similarly, the second set of initial ranges may be referred to as $\{\hat{r}\}^{L2}$, where $L^2$ refers to the number of ranges in the second set of initial ranges, where $\{\hat{r}\}^{L2}$ may be represented as an array or another data structure, with its elements corresponding to the individual initial ranges in the second set of initial ranges respectively. The re-estimated second set of initial ranges may be referred to as $\{\hat{r}^{(1)}\}_i^{L_r^2}$ where the superscript (1) indicates that the second position is used to re-estimate the second set of initial ranges, the subscript $i$ represents the $i$-th iteration of the position determination operation, and $L_r^2$ refers to the number of ranges in the re-estimated second set of initial ranges, where $L_r^2 \leq L^2$. The second deviation $\Delta_2$ may for example be defined as function of the differences between the corresponding elements of $\{\hat{r}^{(1)}\}_i^{L_r^2}$ and $\{\hat{r}\}^{L2}$ e.g. $\Delta_2 \propto \{\hat{r}^{(1)}\}_i^{L_r^2} - \{\hat{r}\}^{L^2}$. This may imply that the second deviation $\Delta_2$ may be derived based on the magnitude or statistical properties (e.g., sum, mean, or maximum) of these differences, capturing the deviation between the re-estimated second set of initial ranges and the second set of initial ranges. The exact proportionality may depend on the specific metric or weighting applied to the differences.

According to one example, the apparatus may be configured to: assign a set of weights to the set of initial ranges based on a reliability of the set of initial ranges, wherein the first position and the second position are determined further using the weights associated with the first set of initial ranges and with the second set of initial ranges respectively.

The set of weights may be determined based on various factors associated with the set of initial ranges, such as signal quality of signals used to estimate the set of initial ranges, their noise levels, or deviations of the set of initial ranges from expected values. The set of weights may be used to emphasize or de-emphasize specific ranges in the first position determination operation and the second position determination operation.

The set weights may, for example, be used for weighting the respective ranges to adjust their contribution to the position estimation for the first position or the second position. Alternatively, the set of weights may be applied to the equations used in the first position estimation operation or the second position estimation, such as weighted trilateration or least squares, to emphasize more reliable ranges and de-emphasize less reliable ones. In this case, the ranges and their weights, in combination with the positions of the anchor nodes, may be integrated into the position estimation process e.g., using techniques such as weighted trilateration or similar algorithms.

For example, consider a set (being the first set or second set) of 6 initial ranges $\{\hat{r}_1, \hat{r}_2, \hat{r}_3, \hat{r}_4, \hat{r}_5, \hat{r}_6\}$, where the positions of the anchor nodes associated with these ranges are $\{p_1, p_2, p_3, p_4, p_5, p_6\}$. Each range $\hat{r}_l$ is assigned a corresponding weight $w_l$ based on its reliability, such as signal quality, noise level, or alignment with expected values. These weights $w_1, w_2, w_3, w_4, w_5,$ and $w_6$ may be used to influence the calculation of the first or second position of the device, by for example, weighting the respective ranges to adjust their contribution to the position estimation. For instance, a range $\hat{r}_4$ with a high weight $w_4$ (indicating high reliability) may have a greater influence on the estimated position, whereas a range $\hat{r}_6$ with a low weight $w_6$ may contribute less significantly. If the first set of initial ranges has the ranges $\hat{r}_1, \hat{r}_2$ and $\hat{r}_3$, the corresponding weights $w_1, w_2$ and $w_3$ may be used for the first position estimation and the second set of initial ranges has the ranges $\hat{r}_1$ and $\hat{r}_3$ the corresponding weights $w_1$ and $w_3$ may be used for the second position estimation. This weighted approach may provide sufficient geometric information while prioritizing more reliable measurements, improving the accuracy and robustness of the position determination.

In the $i$-th iteration of the position determination operation, the set of weights may be updated using the value of the second metric evaluated for the second position. The second metric may represent deviations, residuals, or other quality indicators. The weights are adjusted based on the reliability of the ranges, with lower quality values of the second metric, such as larger deviations or residuals, leading to lower weights, and higher quality values of the second metric, such as smaller deviations, resulting in higher weights.

According to one example, the position determination operation comprises: updating the set of weights based on a deviation of at least part of the set of initial ranges from a re-estimated set of initial ranges, when re-estimated using the second position such that the set of weights used in a next execution of the position determination operation is the updated set of weights. For instance, if the at least part of the set of initial ranges is a subset of it consisting of 10 ranges (out of a total of 12 initial ranges), only those 10 ranges may be re-estimated and used to update the corresponding weights.

The at least part of the set of initial ranges may be the entire set of initial ranges. Alternatively, the at least part of the set of initial ranges may be the second set of initial ranges. For example, the deviation may be used to adjust the set of weights, with ranges showing larger deviations typically being assigned lower weights to reduce their influence, while more consistent ranges are assigned higher weights. The updated set of weights is then used in the next execution of the position determination operation. This iterative adjustment may ensure that the position estimation process becomes progressively more robust, as the influence of unreliable measurements is minimized over successive iterations.

In one example, the set of weights may be used to evaluate the first, second and third metrics. For example, the weights may be used to weight the contributions of the ranges which are involved in the first, second and third metrics.

According to one example, the first residual error is computed as a weighted sum of differences between the first set of initial ranges and the re-estimated first set of initial ranges using the weights associated with the first set of initial ranges, wherein the second residual error is computed as a weighted sum of differences between the second set of initial ranges and the re-estimated second set of initial ranges using the weights associated with the second set of initial ranges. This weighted approach may ensure that the residual errors are influenced more significantly by reliable measurements (with higher weights) and less by unreliable or noisy measurements (with lower weights), improving the accuracy and robustness of the position determination process.

According to one example, the estimation of the first position further comprises estimation of a first bias, and the estimation of the second position comprises estimation of a second bias, wherein the first set of initial ranges are re-estimated further using the first bias, and the second set of initial ranges are re-estimated further using the second bias.

Indeed, the estimation of the first position further includes the estimation of the first bias, while the estimation of the second position includes the estimation of the second bias.

These biases may account for systematic errors or offsets in the initial range measurements. The first set of initial ranges is re-estimated by incorporating the first bias, and similarly, the second set of initial ranges is re-estimated by incorporating the second bias. By factoring in these biases, the re-estimated ranges may become more accurate, reducing the influence of systematic errors and improving the reliability of both the first and second position estimations. This approach may ensure that the position determination process is more robust and precise, particularly in scenarios where consistent offsets affect the range measurements.

Following the notation example, the first bias may be referred to as $\{\hat{b}^{(0)}\}_i$ where the superscript (0) indicates that this is the first bias, and the subscript i represents the i-th iteration of the position determination operation. The second bias may be referred to as $\{b^{(1)}\}_i$ where the superscript (1) indicates that this is the second bias, and the subscript $i$ represents the $i$-th iteration of the position determination operation. The positions of the set of anchor nodes may be referred to as $p$. In this case, each $l$-th re-estimated range of the re-estimated first set of initial ranges may be defined as follows:

$$\{\hat{r}_l^{(0)}\}_i^{L_r} = \left\| p_l - \{\hat{x}^{(0)}\}_i \right\| + \{\hat{b}^{(0)}\}_i$$ , where $\{\hat{x}^{(0)}\}_i$ is the first position estimated in the i-th iteration. Each $l$-th re-estimated range of the re-estimated second set of initial ranges may be defined as follows:

$$\{\hat{r}_l^{(1)}\}_i^{L_r} = \left\| p_l - \{\hat{x}^{(1)}\}_i \right\| + \{\hat{b}^{(1)}\}_i,$$ where $\{\hat{x}^{(1)}\}_i$ is the second position estimated in the i-th iteration.

According to one example, each position of the first and second positions being a three-dimensional (3D) position, 2D position or 1D position.

According to one example, the set of initial ranges are provided as relative ranges which are determined using TDOA based on a difference in signal arrival times at anchor nodes of the set of anchor nodes and a selected reference anchor node of the set of anchor nodes.

For example, the individually initial ranges $\hat{r}_l$ may first be obtained from the times-of-flight measurements of received signals e.g., at the set of anchor nodes. These measured times may be relative to the transmit clock whose bias is unknown. The bias may be common to all range measurements.

According to one example, the selected reference anchor node being the anchor node associated with the smallest arrival time.

According to one example, the set of initial ranges are provided as absolute ranges between the set of anchor nodes and the device.

According to one example, the device and the set of anchor nodes being located indoors.

According to one example, the first and second positions are estimated using a Weighted least Squares (WLS) technique. The candidate second positions may also be estimated using the WLS technique.

The present subject matter may provide an example implementation of the WLS technique, adapted to account for the dimensionality of the environment used in the position determination process. For instance, the WLS technique may be tailored to, one-dimensional, two-dimensional or three-dimensional positioning systems by adjusting the equations to match the spatial context. This may ensure that the technique is optimized for the specific requirements of the positioning system. For that, a set of $L$ anchor radio nodes whose 3D positions are represented by 3x1 position vectors $p_l$, $l \in \{1, \ldots, L\}$

containing the coordinates $(x_l, y_l, z_l)$, i.e., $p_l = \begin{bmatrix} x_l \\ y_l \\ z_l \end{bmatrix}$, $l \in \{1, ..., L\}$, may be provided. The anchor positions are assumed to be known accurately, unlike the device whose position is unknown, and is defined by the 3-D position vector x containing the device's coordinates . $(x_T, y_T, z_T)$: $x = \begin{bmatrix} x_T \\ y_T \\ y_T \end{bmatrix}$ The WLS technique may be implemented according to the following equation: $\hat{\theta}_{WLS} = (A^T H^T W H A)^{-1} A^T H^T W g,$ where

$$H = \begin{bmatrix} [q_1 - q_k]^T & \hat{r}_1 - \hat{r}_k \\ \vdots & \vdots \\ [q_{k-1} - q_k]^T & \hat{r}_{k-1} - \hat{r}_k \\ [q_{k+1} - q_k]^T & \hat{r}_{k+1} - \hat{r}_k \\ \vdots & \vdots \\ [q_L - q_k]^T & \hat{r}_L - \hat{r}_k \end{bmatrix}, \qquad g = \frac{1}{2} \begin{bmatrix} \|p_1 - p_k\|^2 - (\hat{r}_1 - \hat{r}_k)^2 \\ \vdots \\ \|p_{k-1} - p_k\|^2 - (\hat{r}_{k-1} - \hat{r}_k)^2 \\ \|p_{k+1} - p_k\|^2 - (\hat{r}_{k+1} - \hat{r}_k)^2 \\ \vdots \\ \|p_L - p_k\|^2 - (\hat{r}_L - \hat{r}_k)^2 \end{bmatrix} - h, \qquad \text{and}$$

$$W = \begin{bmatrix} w_1 & 0 & 0 \\ 0 & \ddots & 0 \\ 0 & 0 & w_L \end{bmatrix}$$, where $\hat{\theta}_{WLS}$ may be a vector representing the estimated device's position and the associated bias and $w_l$, $l \in \{1, ..., L\} \backslash k$ are weights for the non-reference range measurements. The weights may either be all equal, or different, depending on the estimated quality of each range. This may provide a weighted least squares solution.

The definitions of vectors $q_l$ and $h$ and matrix $\Lambda$ (as well as their sizes) may depend on the number of dimensions $D$ of the space (the dimension of the position) where positioning takes place, where $D = 3$ means 3D positioning performed, $D = 2$ means 2D positioning performed (e.g., on a horizontal plane whose height $z_T$ is known), and $D = 1$ means 1D positioning performed (e.g., on a horizontal line segment whose 2D end points $\lambda_1 = [x_{\lambda 1}, y_{\lambda 1}]^T$ and $\lambda_2 = [x_{\lambda 2}, y_{\lambda 2}]^T$ and height $z_T$ are known). The three vectors may thus be defined as follows: $q_l = \begin{cases} p_l = \begin{bmatrix} x_l \\ y_l \\ z_l \end{bmatrix}, & \text{if } D = 3, \\ [x_l] & \text{if } D \in \{1,2\} \end{cases}$,

$$h = \begin{cases} 0_{L-1}, & \text{if } D = 3, \\ \begin{bmatrix} z_1 - z_k \\ \vdots \\ z_{k-1} - z_k \\ z_{k+1} - z_k \\ \vdots \\ z_L - z_k \end{bmatrix} (z_T - z_k), & \text{if } D = 2, \\ \begin{bmatrix} z_1 - z_k \\ \vdots \\ z_{k-1} - z_k \\ z_{k+1} - z_k \\ \vdots \\ z_L - z_k \end{bmatrix} (z_T - z_k) - H \begin{bmatrix} \lambda_2 - q_r \\ 0 \end{bmatrix}, & \text{if } D = 1 \end{cases}$$

and

$$\Lambda = \begin{cases} I_{D+1}, & \text{if } D \in \{2,3\}, \\ \begin{bmatrix} \lambda_1 - \lambda_2 & 0_2 \\ 0 & 1 \end{bmatrix}, & \text{if } D = 1 \end{cases},$$

where $I_D$ is the $D \times D$ identity matrix, and $0_2$ is a $2 \times 1$ vector of zeros. The number of ranges which may be required for the system of equations that model the ranges as function of the anchor position and the device position to be solvable may be

$L \geq D + 2$, where D is the number of dimensions of the estimated position vector. For example, to perform 3D positioning, measurements from at least 5 anchor nodes e.g., that are not in the same plane, may be needed.

For the 3D positioning, the estimated 3D position $D = 3$ and range bias when the kth anchor is taken as reference for range differences may be extracted from the $4 \times 1$ WLS estimate $\hat{\theta}_{WLS}$ as described herein, as follows: $\hat{x}_{WLS} = \hat{\theta}_{WLS}(1:3) + p_k$ and $\hat{b}_{WLS} = \hat{r}_k - \theta\theta_{WLS}(4)$, where the notation $(i: j)$ denotes the elements of a vector from index $i$ to index $j$, and assuming the index convention with counting starting at 1, $\hat{x}_{WLS}$ is the estimated device's 3D position, and $\hat{b}_{WLS}$ is the corresponding bias. These equations may be jointly denoted in short as: $\{\hat{x}_{WLS}, \hat{b}_{WLS}\} = WLS_k(p_l, \hat{r}_l, w_l)$, $l \in \{1, \ldots, L\}\backslash k$.

For the 2D positioning, the estimated 2D position ($D = 2$) and range bias when the kth anchor is taken as reference for range differences may be extracted from the $3 \times 1$ WLS estimate $\hat{\theta}_{WLS}$ as described herein, and then the known height $z_T$ of the horizontal plane containing the target position is added as follows: $\hat{x}_{WLS} = \begin{bmatrix} \hat{\theta}_{WLS}(1:2) + q_k \\ z_T \end{bmatrix}$, $\hat{b}_{WLS} = \hat{r}_k - \hat{\theta}_{WLS}(3)$, where $\hat{x}_{WLS}$ is the estimated device's 2D position, and $\hat{b}_{WLS}$ is the corresponding bias. These equations may be jointly denoted in short as: $\{\hat{x}_{WLS}, \hat{b}_{WLS}\} = WLS_k(p_l, \hat{r}_l, w_l)$, $l \in \{1, \ldots, L\}\backslash k$.

For the 1D positioning (i.e., for $D = 1$), it may be assumed that the true device position is constraint to a straight horizontal line segment whose 2D end points $\lambda_1 = [x_{\lambda 1}, y_{\lambda 1}]^T$ and $\lambda_2 = [x_{\lambda 2}, y_{\lambda 2}]^T$ and whose height $z_T$ are known, i.e., $x = \begin{bmatrix} \alpha\lambda_1 + (1 - \alpha)\lambda_2 \\ z_T \end{bmatrix}$, where the parameter $\alpha$ that determined the target's position on the line segment is the unknown, along with the range bias. Therefore, estimating the position reduces to estimating the parameter $\alpha$ which determines the 1D position on the line segment. The estimated 1D position ($D = 1$) and range bias when the kth anchor is taken as reference for range differences may be extracted from the $2 \times 1$ WLS estimate $\hat{\theta}_{WLS}$ as described above and then the known height $z_T$ of the horizontal line segment containing the target position is added as follows: $\hat{x}_{WLS} = \begin{bmatrix} \hat{\theta}_{WLS}(1)\lambda_1 + \left(1 - \hat{\theta}_{WLS}(1)\right)\lambda_2 \\ z_T \end{bmatrix}$, $\hat{b}_{WLS} = \hat{r}_k - \hat{\theta}_{WLS}(2)$, $\hat{x}_{WLS}$ is the estimated device's 1D position, and $\hat{b}_{WLS}$ is the corresponding bias. These equations may be jointly denoted in short as: $\{\hat{x}_{WLS}, \hat{b}_{WLS}\} = WLS_k(p_l, \hat{r}_l, w_l)$, $l \in \{1, \ldots, L\}\backslash k$.

Based on the example implementation of the WLS technique as defined above, or as defined in another suitable manner, an example implementation of an i-th iteration (e.g., the first iteration) of the position determination operation may proceed as follows. This iteration incorporates the WLS method to estimate the device's position using a given set of initial ranges, anchor node positions, and associated weights, with potential adaptations for the specific dimensionality or constraints of the positioning environment. The notation in this example remains consistent with prior usage; however, for simplicity, the indices representing the iteration and the number of ranges are omitted. Instead, an index "WLS" is introduced to denote the WLS technique. For instance, the first position $\{\hat{x}^{(0)}\}_i$ may be referred to as $\hat{x}_{WLS}^{(0)}$, the first bias $\{\hat{b}^{(0)}\}_i$ may be referred to as $\hat{b}_{WLS}^{(0)}$ and so on.

A first operation may be performed in the current iteration as follows. The initial input variables may be: all the known anchor node positions $p_l$, $l \in \{1, \ldots, L\}$, all the measured ranges that possibly include outlier measurements $\hat{r}_l$, $l \in \{1, \ldots, L\}$, and the initial weights for the measurements $w_l$, $l \in \{1, \ldots, L\}$. The initial solution (at the current iteration), depending on the number of dimensions $D$ with the chosen range reference corresponding to anchor node $l_0 \in \{1, \ldots L\}$ whose estimates range is the minimum among all estimates ranges is then $\left\{\hat{x}_{WLS}^{(0)}, \hat{b}_{WLS}^{(0)}\right\} = WLS_{l_0}(p_l, \hat{r}_l, w_l)$, $l \in \{1, \ldots, L\}\backslash l_0$. Using WLS technique for the position and range offset, depending on the number of dimensions $D$, the ranges may be re-estimated for the first position, $\hat{r}_l^{(0)}$, $l \in \{1, \ldots, L\}\backslash l_o$ as follows: $\hat{r}_l^{(0)} = \left\| p_l - \hat{x}_{WLS}^{(0)} \right\| + \hat{b}_{WLS}^{(0)}$, $l \in \{1, \ldots, L\}\backslash l_0$. The Weighted Root-Mean-Square residual Error (WRMSE) may be computed between the original range measurements $\hat{r}_l$ and the re-estimated ranges $\hat{r}_l^{(0)}$ for all anchor nodes at the current iteration as $e^{(0)} = \sqrt{\frac{1}{L}\sum_{l=1}^{L} w_l\left(\hat{r}_l^{(0)} - \hat{r}_l\right)^2}$, $l \neq l_0$. The WRMSE is presented as an example of the first metric, but it is not limiting, as other types of metrics may also be used, as described herein. For instance, instead of the RMSE, metrics such as the median, maximum, or mean can be employed.

A second operation may be performed in the current iteration as follows: one range from the initial ranges used in the first operation is eliminated iteratively, and a position estimation is subsequently carried out using the reduced set of ranges and the WRMSE is computed to evaluate the accuracy of the estimated position, incorporating the assigned weights. In each $k$-th iteration of the second operation, the $k$-th anchor node and its range may be removed, and a new reference locator $l_1(k)$ may be chosen for the reduced set of locators, and a new position and range bias may be recomputed, depending on the number of dimensions $D$, i.e. for $k \in \{1, \dots L\}$, removing one anchor node at a time from the complete set of $L$ measurements: $\left\{ \hat{x}_{\text{WLS}}^{(1)}(k), \hat{b}_{\text{WLS}}^{(1)}(k) \right\} = WLS_{l_1(k)}(p_l, \hat{r}_l, w_l)$, $l \in \{1, \dots, L\}\backslash k$. The ranges may be re-estimated at second stage, based on the new position and range bias estimates $\hat{r}_l^{(1)}(k) = \left\| p_l - \hat{x}_{\text{WLS}}^{(1)} \right\| + \hat{b}_{\text{WLS}}^{(1)}$, $l \in \{1, \dots, L\}\backslash k$. A new residual WRMSE may be recomputed: $e^{(1)}(k) = \sqrt{\frac{1}{L}\sum_{l=1}^{L} w_l \left( \hat{r}_l^{(1)}(k) - \hat{r}_l \right)^2}$. This may result in a number of solutions smaller or equal to the number of initial ranges used in the first operation of the current i-th iteration depending on whether a stopping criterion is associated with the iterative process of the second operation.

The solution out of the $k$ solutions ($k \in \{1, \dots, L\}$) that yields the least residual WRMSE may be chosen, i.e., an index corresponding to eliminating the range from anchor node $k_1$: $k_1 = \arg\min_k e^{(1)}(k)$, $k \in \{1, \dots, L\}$. If the minimum error $e^{(1)}(k_1)$ at the current i-th iteration is less than the initial error $e^{(0)}$ at the current i-th iteration, then the new WLS solution $\left\{ \hat{x}_{\text{WLS}}^{(1)}(k_1), \hat{b}^{(1)}(k_1) \right\}$ is chosen instead of the initial solution $\left\{ \hat{x}_{\text{WLS}}^{(0)}, \hat{b}^{(0)} \right\}$, because it may mean that one anchor node whose range is an outliers has been eliminated, as indicated by the decreasing WRMSE: $\left\{ \hat{x}_{\text{WLS}}^{(1)}, \hat{b}^{(1)} \right\} = \left\{ \hat{x}_{\text{WLS}}^{(1)}(k_1), \hat{b}_{\text{WLS}}^{(1)}(k_1) \right\}$. The weights may then be recomputed $w_l = f\left( \left| \hat{r}_l^{(1)}(k_1) - \hat{r}_l \right| \right)$, $l \in \{1, \dots, L\}\backslash k_1$ for the next (i+1)-th iteration, where the function $f$ maps the positioning WRMSE into weights that lie e.g. in the interval [0,1], or some min-max range. The function may be chosen to become zero if, for example, a maximum pre-set error $e_{max}$ has been exceeded, which may mean that those measurements will be completely discarded. An example of the function $f$ may be the Andrew's function or the Huber's function, but other functions (e.g. monotonic) can be used as well.

The iterations for the second operation may stop when at least of the following conditions (but not limited to) are met: the WRMSE of the current iteration is higher than in the previous iteration (then the previous solution is returned), the WRMSE is below a pre-established threshold, the pre-set number of iterations has been reached, the number of measurements after the elimination process is less than the number of dimensions plus two, i.e., $D + 2$, the number of measurements exceeds a predefined threshold, or other meaningful criteria could be computational complexity such as calculation time have been exceeded.

The first operation may provide an example implementation of the first position estimation operation and the second operation may provide an example implementation the second position estimation operation.

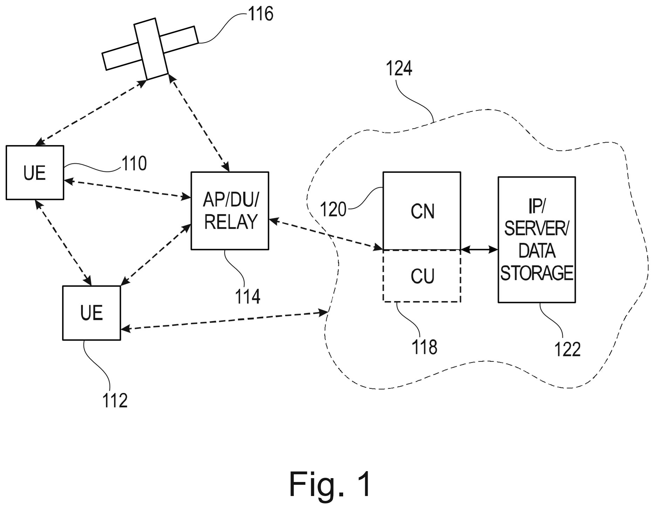

**FIG. 1** is a block diagram illustrating an example radio access network in accordance with an example of the present subject matter. FIG. 1 illustrates examples of simplified system architectures only showing some elements and functional entities, all being logical units, whose implementation may differ from what is shown. The connections illustrated in FIG.1 are logical connections; the actual physical connections may be different. It is apparent to a person skilled in the art that the system typically comprises also other functions and structures than those illustrated in FIG.1.

The embodiments are not, however, restricted to the system given as an example but a person skilled in the art may apply the solution to other communication systems provided with necessary properties.

The example radio access network illustrated in FIG.1 includes devices 110 and 112. The devices 110 and 112 may, for example, be user devices. The devices 110 and 112 are configured to be in a wireless connection on one or more communication channels with a node 114. The node 114 is further connected to a core network 120. In one example, the node 114 may be an access node (such as (e/g)NodeB) 114 providing or serving devices in a cell. In one example, the node 114 may be a non-3GPP access node. The physical link from a device to a (e/g)NodeB is called uplink or reverse link and the physical link from the (e/g)NodeB to the device is called downlink or forward link. It should be appreciated that (e/g) NodeBs or their functionalities may be implemented by using any node, host, server or access point etc. entity suitable for such a usage.

A communications system typically comprises more than one (e/g)NodeB in which case the (e/g)NodeBs may also be configured to communicate with one another over links, wired or wireless, designed for the purpose. These links may be used for signaling purposes. The (e/g)NodeB is a computing device configured to control the radio resources of communication system it is coupled to. The NodeB may also be referred to as a base station, an access point or any other type of interfacing device including a relay station capable of operating in a wireless environment. The (e/g)NodeB includes or is coupled to transceivers. From the transceivers of the (e/g)NodeB, a connection is provided to an antenna unit that establishes bi-directional radio links to devices. The antenna unit may comprise a plurality of antennas or antenna elements. The (e/g)NodeB is further connected to the core network 120 (CN or next generation core NGC). For example, the (e/g)NodeB may connect to an access and mobility management function (AMF) and user plane function (UPF) in the control plane and user plane, respectively. Depending on the system, the counterpart on the CN side can be a serving gateway (S-GW, routing and forwarding user data packets), packet data network gateway (P-GW), for providing connectivity of devices (UEs) to external packet data networks, or mobile management entity (MME), etc.

The device (also called user device, UE, user equipment, user terminal, terminal device, etc.) illustrates one type of an apparatus to which resources on the air interface are allocated and assigned, and thus any feature described herein with a device may be implemented with a corresponding apparatus, such as a relay node. An example of such a relay node is a layer 3 relay (self-backhauling relay) towards the base station.

The device typically refers to a device (e.g. a portable or non-portable computing device) that includes wireless mobile communication devices operating with or without a subscriber identification module (SIM), including, but not limited to, the following types of devices: a mobile station (mobile phone), smartphone, personal digital assistant (PDA), handset, device using a wireless modem (alarm or measurement device, etc.), laptop and/or touch screen computer, tablet, game console, notebook, and multimedia device. It should be appreciated that a device may also be a nearly exclusive uplink only device, of which an example is a camera or video camera loading images or video clips to a network. A device may also be a device having capability to operate in IoT network which is a scenario in which objects are provided with the ability to transfer data over a network without requiring human-to-human or human-to-computer interaction, e.g., to be used in smart power grids and connected vehicles. The device may also utilize cloud. In some applications, a device may comprise a user portable device with radio parts (such as a watch, earphones or eyeglasses) and the computation is carried out in the cloud. The device (or in some embodiments a layer 3 relay node) is configured to perform one or more of user equipment functionalities. The device may also be called a subscriber unit, mobile station, remote terminal, access terminal, user terminal or user equipment just to mention but a few names or apparatuses.

Various techniques described herein may also be applied to a cyber-physical system (CPS) (a system of collaborating computational elements controlling physical entities). CPS may enable the implementation and exploitation of massive amounts of interconnected ICT devices (sensors, actuators, processors microcontrollers, etc.) embedded in physical objects at different locations. Mobile cyber physical systems, in which the physical system in question has inherent mobility, are a subcategory of cyber-physical systems. Examples of mobile physical systems include mobile robotics and electronics transported by humans or animals.

Additionally, although the apparatuses have been depicted as single entities, different units, processors and/or memory units (not all illustrated in FIG. 1) may be implemented.

5G enables using Multiple Input Multiple Output (MIMO) antennas, many more base stations or nodes than an existing LTE system (a so-called small cell concept), including macro sites operating in co-operation with smaller stations and employing a variety of radio technologies depending on service needs, use cases and/or spectrum available. 5G mobile communications supports a wide range of use cases and related applications including video streaming, augmented reality, different ways of data sharing and various forms of machine type applications (such as (massive) machine-type communications (mMTC), including vehicular safety, different sensors and real-time control. 5G is expected to have multiple radio interfaces, namely below 6GHz, cmWave and mmWave, and also being integrable with existing legacy radio access technologies, such as the LTE. Integration with the LTE may be implemented, at least in the early phase, as a system, where macro coverage is provided by the LTE and 5G radio interface access comes from small cells by aggregation to the LTE. In other words, 5G is planned to support both inter-RAT operability (such as LTE-5G) and inter-RI operability (inter-radio interface operability, such as below 6GHz - cmWave, below 6GHz - cmWave - mmWave). One of the concepts considered to be used in 5G networks is network slicing in which multiple independent and dedicated virtual sub-networks (network instances) may be created within the same infrastructure to run services that have different requirements on latency, reliability, throughput and mobility.

The current architecture in LTE networks is fully distributed in the radio and fully centralized in the core network. The low latency applications and services in 5G require bringing the content close to the radio which leads to local break out and multi-access edge computing (MEC). 5G enables analytics and knowledge generation to occur at the source of the data. This approach requires leveraging resources that may not be continuously connected to a network such as laptops, smartphones, tablets and sensors. MEC provides a distributed computing environment for application and service hosting. The MEC structure also has the ability to store and process content in close proximity to cellular subscribers for faster response time. Edge computing covers a wide range of technologies such as wireless sensor networks, mobile data acquisition, mobile signature analysis, cooperative distributed peer-to-peer ad hoc networking and processing also classifiable as local cloud/fog computing and grid/mesh computing, dew computing, mobile edge computing, cloudlet, distributed data storage and retrieval, autonomic self-healing networks, remote cloud services, augmented and virtual reality, data caching, IoT (massive connectivity and/or latency critical), critical communications (autonomous vehicles, traffic safety, real-time analytics, time-critical control, healthcare applications).

The communication system is also able to communicate with other networks, such as a public switched telephone network or the Internet as illustrated by the component referenced by reference numeral 122, or utilize services provided by them. The communication network may also be able to support the usage of cloud services, for example at least part of core network operations may be carried out as a cloud service (this is illustrated in FIG.1 using "cloud" 124). The communication system may also comprise a central control entity, or a like, providing facilities for networks of different operators to cooperate for example in spectrum sharing.

The technology of edge cloud may be brought into a radio access network (RAN) by utilizing network function virtualization (NFV) and software defined networking (SDN). Using the technology of edge cloud may mean access node operations to be carried out, at least partly, in a server, host or node operationally coupled to a remote radio head or base station comprising radio parts. It is also possible that node operations will be distributed among a plurality of servers, nodes or hosts. Application of cloudRAN architecture enables RAN real time functions being carried out at the RAN side (in a distributed unit (DU)) and non-real time functions being carried out in a centralized manner (in a centralized unit, CU 118).

It should also be understood that the distribution of labor between core network operations and base station operations may differ from that of the LTE or even be non-existent. Some other technology advancements probably to be used are Big Data and all-IP, which may change the way networks are being constructed and managed. 5G is being designed to support multiple hierarchies, where MEC servers can be placed between the core and the base station or nodeB (NB). It should be appreciated that MEC can be applied in 4G networks as well.

5G may also utilize satellite communication to enhance or complement the coverage of 5G service, for example by providing backhauling. Possible use cases are providing service continuity for machine-to-machine (M2M) or Internet of Things (IoT) devices or for passengers on board of vehicles, or ensuring service availability for critical communications, and future railway/maritime/aeronautical communications. Satellite communication may utilize geostationary earth orbit (GEO) satellite systems, but also low earth orbit (LEO) satellite systems, in particular mega-constellations (systems in which hundreds of (nano)satellites are deployed). Each satellite 116 in the mega-constellation may cover several satellite-enabled network entities that create on-ground cells. The on-ground cells may be created via an on-ground relay node 114 or by a gNB located on-ground or in a satellite.

It is understandable for a person skilled in the art that the depicted system is only an example of a part of a radio access system and in practice, the system may comprise a plurality of (e/g)NBs, the device may have an access to a plurality of radio cells and the system may comprise also other apparatuses, such as physical layer relay nodes or other network elements, etc. One of the (e/g)NBs may be a Home(e/g)NB (H(e/g)NBs). Additionally, in a geographical area of a radio communication system a plurality of different kinds of radio cells as well as a plurality of radio cells may be provided. Radio cells may be macro cells (or umbrella cells) which are large cells, usually having a diameter of up to tens of kilometers, or smaller cells such as micro-, femto- or picocells. The (e/g)NBs of FIG.1 may provide any kind of these cells. A cellular radio system may be implemented as a multilayer network including several kinds of cells. Typically, in multilayer networks, one access node provides one kind of a cell or cells, and thus a plurality of (e/g)NBs are required to provide such a network structure.

For fulfilling the need for improving the deployment and performance of communication systems, the concept of "plug-and-play" (e/g)NBs has been introduced. Typically, a network which is able to use "plug-and-play" (e/g)NBs, includes, in addition to H(e/g)NBs, a home nodeB gateway, or HNB-GW (not illustrated in FIG.1). A HNB-GW, which is typically installed within an operator's network, may aggregate traffic from a large number of HNBs back to a core network.

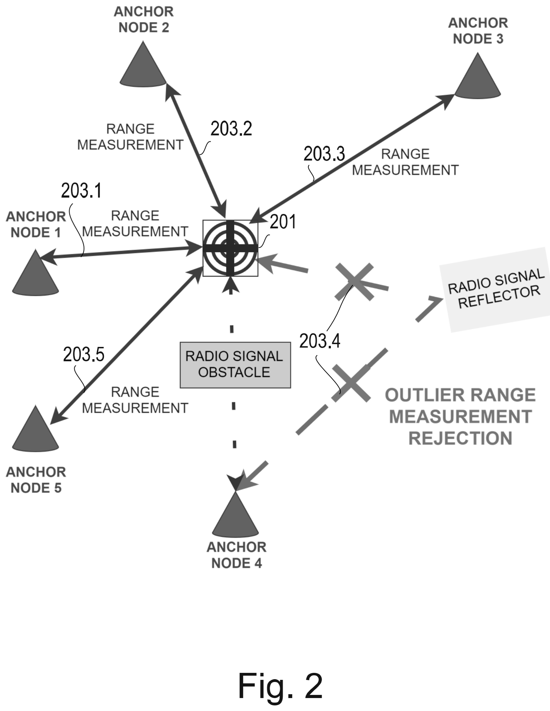

FIG. 2 is a diagram illustrating a set of anchor nodes and device for determining a position of the device in accordance with an example of the present subject matter.

The set of anchor nodes, illustrated as triangles, are numbered from NODE 1 to NODE 6. The device whose position is to be determined is represented by box 201. The set of initial ranges between the anchor nodes and the device 201 are labeled as 203.1 through 203.6, where each I-th range 203.I corresponds to the estimated distance between the device 201 and the respective I-th anchor node (e.g., NODE I). These set of initial ranges may, for example, be estimated from signal measurements, such as TOA, TDOA, or other positioning techniques. The set of initial ranges 203.1 through 203.6 may include reliable ranges representing ranges 203.1, 203.2, 203.3, 203.5 and 203.6 (e.g., solid lines representing clear paths) or unreliable measurement (dashed lines) representing the range 203.4 caused by reflected or obstructed signals, which need to be identified and filtered to improve the accuracy of the position estimation. As indicated in FIG. 2, the present subject matter may enable to identify the unreliable range 203.4 and remove it. By excluding reflected and obstructed signals, only valid measurements may contribute to the position estimation, ensuring that the estimated target position aligns closely with the true target position (cross sign).

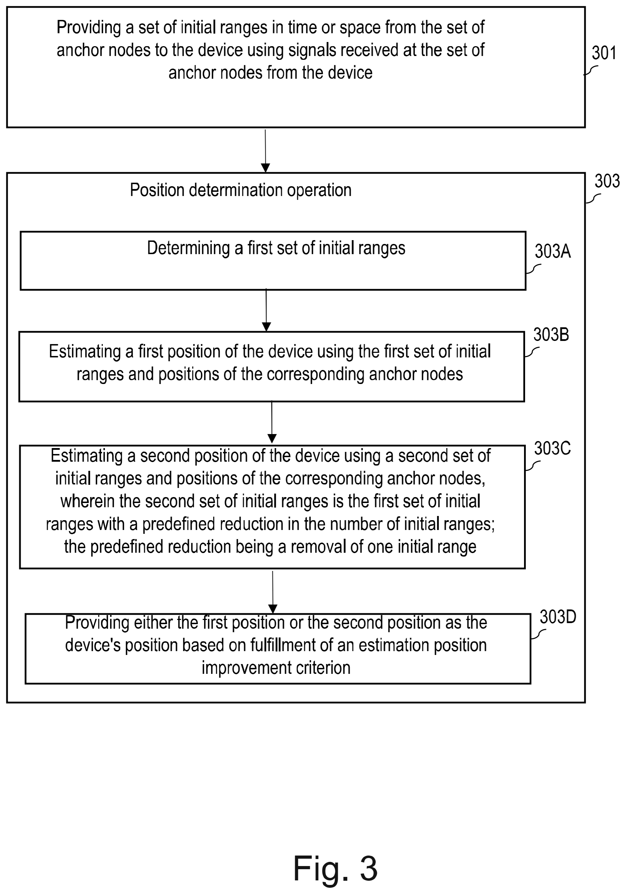

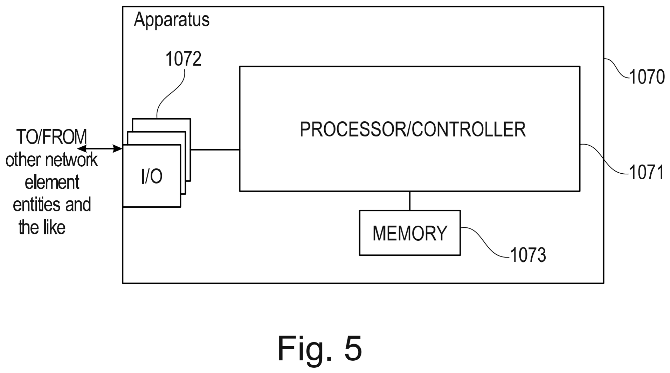

FIG. 3 is a process flowchart illustrating a method for determining a position of a device using a set of anchor nodes according to an example of the present subject matter. For the purpose of explanation, the method described in reference to FIG. 3 may be implemented in an apparatus such as the node 114 illustrated and described in reference to FIG. 1 or apparatus illustrated and described in reference to FIG. 5, or any of the anchor nodes or the device illustrated and described in reference to Fig. 2 but is not limited to this implementation.

At block 301, a set of initial ranges in time or space between the set of anchor nodes and the device may be provided. At block 303, one or more times a position determination operation may be executed one or more time. The position determination operation comprises: determining in block 303A a first set of initial ranges, estimating in block 303B a first position of the device using the first set of initial ranges and positions of the corresponding anchor nodes, estimating a second position of the device in block 303C using a second set of initial ranges and positions of the corresponding anchor nodes; providing in block 303D either the first position or the second position as the device's position based on fulfillment of an estimation position improvement criterion. The second set of initial ranges is the first set of initial ranges with a predefined reduction in the number of initial ranges; wherein the first set of initial ranges is the set of initial ranges in the initial execution of the position determination operation or otherwise is the second set of initial ranges of a last execution of the position determination operation. The predefined reduction is a removal of one initial range. The position determination operation is executed until the provision of the position.

For example, blocks 303A and 303B may represent the first position estimation operation may. Block 303C may represent the second position estimation operation and block 303D may represent the assessment operation.

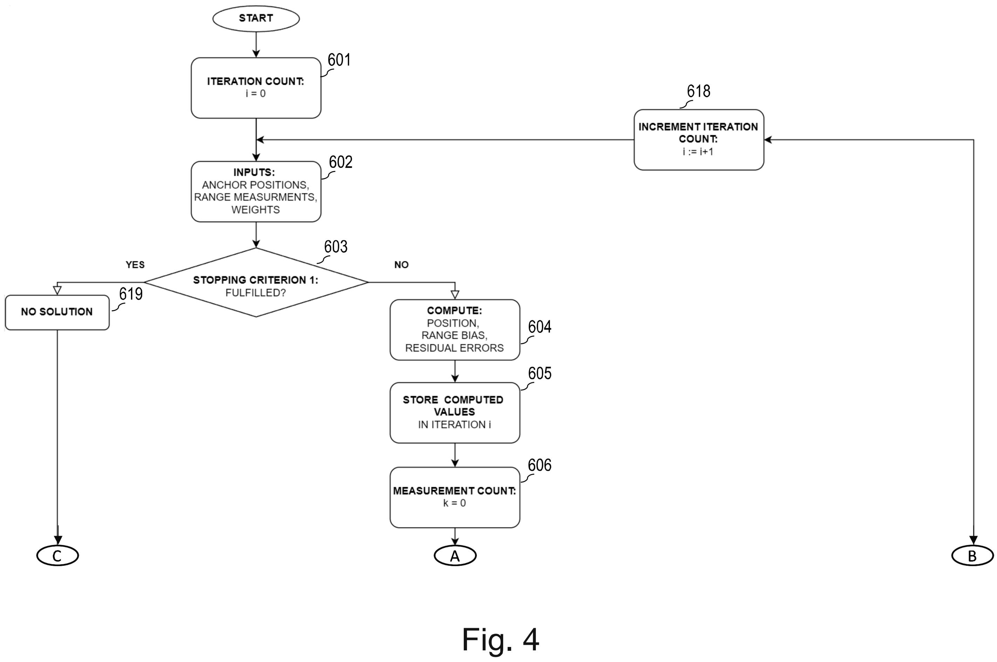

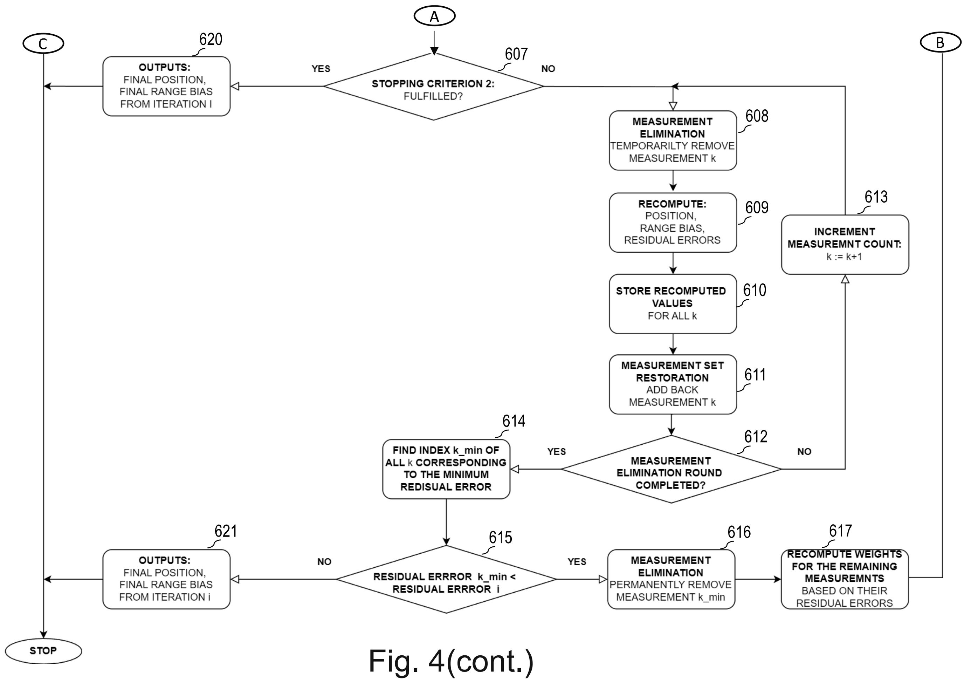

**FIG. 4** is a diagram illustrating a method for determining a position of a device in accordance with an example of the present subject matter. The method of FIG. 4 may provide an example implementation of the iterative execution of the position determination operation.

The flow diagram consists of two loops: the outer iteration loop with index i, corresponding to an Iterative Reweighted Least Squares (IRLS) procedure, and the inner measurement elimination loop with index k. The inner and outer loops may be conditioned by stopping criteria 1 (603) and 2 (607), respectively, which may include one or a combination of the following conditions: an insufficient number of measurements with non-zero weights left after the elimination process (number of measurements may be higher than or equal to two), the number of measurements falling below a pre-established threshold, the error in the previous iteration being smaller than in the current iteration, the residual error being smaller than a pre-established threshold, reaching a pre-established number of iterations, or computational complexity constraints. The method may operate as follows. Initially, all input measurement tuples, consisting of anchor positions, estimated ranges, and measurement weights, are considered in the computation (i=0, 601, 602). In each iteration i, the method may select one (best) of the two positions (and associated bias): the one determined in step 604 and the one associated with kmin (if determined), where the selected position and associated bias may be referred to as being the "position and bias from iteration i". The first stopping criterion (603) is then tested: if stopping criterion 1 is met (e.g., insufficient measurements in the first iteration), no solution can be provided (619), and if a solution exists from the previous iteration i-1 (i.e., "position and bias from iteration i-1"), it is returned as the final output. If criterion 1 is not fulfilled, an estimated position and corresponding range bias are computed (604), for example, using the WLS technique. The ranges are then re-estimated as the distances between the anchor positions and the estimated position, corrected with the range bias to obtain bias-compensated ranges. Residual errors may be computed as the difference between re-estimated and initial ranges, and these values, along with the position and range bias, are stored for future processing (605). Next, the inner loop counter (k=0, 606) is initialized in order to eliminate one range at a time if the criterion 2 (607) is not fulfilled. If criterion 2 is fulfilled the position and associated bias which are estimated in the iteration are provided (620). After removing a single range (k, 608), a new estimated position, range bias, and residual errors are recomputed (609), and the recomputed values are stored (610). The temporarily removed range is then restored (611), and the elimination process continues until all ranges have been removed one at a time (612). Once the elimination cycle is complete, a total residual error is computed for each measurement subset k, and the index kmin, corresponding to the minimum total residual error, is determined (614). This minimum total residual error is compared to the total residual error at the start of the iteration (i). If the minimum total residual error (kmin) is greater than the starting total residual error, the position and range bias from iteration i are output (621), and the procedure terminates. If it is smaller, the measurement kmin is permanently eliminated from the set (616), and a new set of weights is computed based on the remaining ranges, assigning higher weights to those producing lower errors (617). The iteration process continues as long as stopping criterion 1 (603) is not fulfilled, incrementing the iteration count (i:=i+1, 618) and proceeding with a new elimination round using the reduced set of measurements. This process repeats until the criteria are met or the procedure terminates.

In **FIG. 5,** a block circuit diagram illustrating a configuration of an apparatus 1070 is shown, wherein the apparatus 1070 is configured to implement at least part of the present subject matter. It is to be noted that the apparatus 1070 illustrated in FIG. 5 may comprise several further elements or functions besides those described herein below, which are omitted herein for the sake of simplicity as they are not essential for the understanding. Furthermore, the apparatus may be also another device having a similar function, such as a chipset, a chip, a module, etc., which can also be part of an apparatus or attached as a separate element to the apparatus 1070, or the like. The apparatus 1070 may comprise a processing function or processor 1071, such as a central processing unit (CPU) or the like, which executes instructions given by programs or the like related to a flow control mechanism. The processor 1071 may comprise one or more processing portions dedicated to specific processing as described below, or the processing may be run in a single processor. Portions for executing such specific processing may be also provided as discrete elements or within one or more further processors or processing portions, such as in one physical processor like a CPU or in several physical entities, for example. Reference sign 1072 denotes transceiver or input/output (I/O) units (interfaces) connected to the processor 1071. The I/O units 1072 may be used for communicating with one or more other network elements, entities, terminals or the like. The I/O units 1072 may be a combined unit comprising communication equipment towards several network elements or may comprise a distributed structure with a plurality of different interfaces for different network elements. Reference sign 1073 denotes a memory usable, for example, for storing data and programs to be executed by the processor 1071 and/or as a working storage of the processor 1071.

The processor 1071 is configured to execute processing related to the subject matter described throughout this disclosure. In particular, the apparatus 1070 may be configured to perform the method as described in reference to FIG. 3 or 4.

For example, the processor 1071 is configured for: for determining a position of a device using a set of anchor nodes in a wireless communication system, by at least:

providing a set of initial ranges in time or space between the set of anchor nodes and the device using signals received at the set of anchor nodes from the device; executing one or more times a position determination operation, the position determination operation comprising: determining a first set of initial ranges; estimating a first position of the device using the first set of initial ranges and positions of the corresponding anchor nodes;
estimating a second position of the device using a second set of initial ranges and positions of the corresponding anchor nodes; providing either the first position or the second position as the device's position based on fulfillment of an estimation position improvement criterion; wherein the second set of initial ranges is the first set of initial ranges with a predefined reduction in the number of initial ranges; wherein the first set of initial ranges is the set of initial ranges in the initial execution of the position determination operation or otherwise is the second set of initial ranges of a last execution of the position determination operation; wherein the predefined reduction being a removal of one initial range wherein the position determination operation is executed until the provision of the position.

As will be appreciated by one skilled in the art, aspects of the present invention may be embodied as an apparatus, method, computer program or computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects of the present invention may take the form of a computer program product embodied in one or more computer readable medium(s) having computer executable code embodied thereon. A computer program comprises the computer executable code or "program instructions".

Any combination of one or more computer readable medium(s) may be utilized. The computer readable medium may be a computer readable storage medium. A 'computer-readable storage medium' as used herein encompasses any tangible storage medium which may store instructions which are executable by a processor of a computing device. The computer-readable storage medium may be referred to as a computer-readable non-transitory storage medium. The computer-readable storage medium may also be referred to as a tangible computer readable medium. In some embodiments, a computer-readable storage medium may also be able to store data which is able to be accessed by the processor of the computing device.

'Computer memory' or 'memory' is an example of a computer-readable storage medium. Computer memory is any memory which is directly accessible to a processor. 'Computer storage' or 'storage' is a further example of a computer-readable storage medium. Computer storage is any non-volatile computer-readable storage medium. In some embodiments computer storage may also be computer memory or vice versa.

A 'processor' as used herein encompasses an electronic component which is able to execute a program or machine executable instruction or computer executable code. References to the computing device comprising "a processor" should be interpreted as possibly containing more than one processor or processing core. The processor may for instance be a multi-core processor. A processor may also refer to a collection of processors within a single computer system or distributed amongst multiple computer systems. The term computing device should also be interpreted to possibly refer to a collection or network of computing devices each comprising a processor or processors. The computer executable code may be executed by multiple processors that may be within the same computing device or which may even be distributed across multiple computing devices.

Computer executable code may comprise machine executable instructions or a program which causes a processor to perform an aspect of the present invention. Computer executable code for carrying out operations for aspects of the present invention may be written in any combination of one or more programming languages, including an object oriented programming language such as Java, Smalltalk, C++ or the like and conventional procedural programming languages, such as the "C" programming language or similar programming languages and compiled into machine executable instructions. In some instances the computer executable code may be in the form of a high level language or in a pre-compiled form and be used in conjunction with an interpreter which generates the machine executable instructions on the fly.

Generally, the program instructions can be executed on one processor or on several processors. In the case of multiple processors, they can be distributed over several different entities. Each processor could execute a portion of the instructions intended for that entity. Thus, when referring to a system or process involving multiple entities, the computer program or program instructions are understood to be adapted to be executed by a processor associated or related to the respective entity.

**Claims**

1.  An apparatus for determining a position of a device using a set of - nodes, referred to as anchor nodes, the apparatus comprising means for:

    providing a set of initial ranges in time or space from the set of anchor nodes to the device;
    executing one or more times a position determination operation, the position determination operation comprising:

       determining a first set of initial ranges;
       estimating a first position of the device using the first set of initial ranges and positions of the corresponding anchor nodes;
       estimating a second position of the device using a second set of initial ranges and positions of the corresponding anchor nodes;
       providing either the first position or the second position as the device's position based on fulfillment of an estimation position improvement criterion;
       wherein the second set of initial ranges is the first set of initial ranges with a predefined reduction in the number of initial ranges; the predefined reduction being a removal of one initial range, wherein the first set of initial ranges is the set of initial ranges in the initial execution of the position determination operation or otherwise is the second set of initial ranges of a last execution of the position determination operation;

    wherein the position determination operation is executed until the provision of the position.

2.  The apparatus according to claim 1, wherein the estimation position improvement criterion is at least one of the following:

    a deviation of at least part of the set of initial ranges, from a re-estimated set of initial ranges, when re-estimated using the second position, being smaller than a threshold;
    a deviation of at least part the set of initial ranges, from a re-estimated set of initial ranges, when re-estimated using the second position, being higher than a deviation of at least part of the set of initial ranges from a re-estimated set of initial ranges, when re-estimated using the first position;
    a maximum number of iterations being reached;
    the number of the set of initial ranges or the number of the first set or initial ranges or the number of the second set of initial ranges being smaller than a dimension of the second position plus two; or
    the number of the set of initial ranges exceeding a threshold.

3.  The apparatus according to claim 1 or 2, further comprising means for estimating the second position by at least:

    applying the predefined reduction in the number of initial ranges iteratively on the first set of initial ranges producing multiple candidate second sets of initial ranges; estimating a candidate second position of the device using each candidate second set of initial ranges and positions of the corresponding anchor nodes;
    selecting one of the candidate second sets of initial ranges using the estimated candidate second positions;
    wherein the estimated second position is the estimated candidate second position of the selected candidate second set of initial ranges, and the second set of initial ranges is the selected candidate second set of initial ranges.

4.  The apparatus according to claim 3, further comprising means for selecting one of the candidate second sets of initial ranges whose candidate second position induces the smallest deviation of the set of initial ranges from a re-estimated set of initial ranges, when re-estimated using the candidate second position.

5. The apparatus according to claim 3 or 4, further comprising means for selecting one of the candidate second sets of initial ranges by at least:

for each candidate second set of initial ranges: re-estimating the candidate second set of initial ranges using the candidate second position and the positions of the corresponding anchor nodes; and computing a candidate second residual error indicating a difference between the second set of initial ranges and the corresponding re-estimated ranges;
selecting the candidate second set of second set of initial ranges associated with the smallest candidate second residual error.

6. The apparatus according to any of claims 1-5, wherein the position determination operation comprises:

re-estimating the first set of initial ranges using the first position and the positions of the corresponding anchor nodes;
re-estimating the second set of initial ranges using the second position and the positions of the corresponding anchor nodes;
wherein the estimation position improvement criterion is defined based on a first comparison between the first set of initial ranges and the re-estimated first set of initial ranges, and a second comparison between the second set of initial ranges and the re-estimated second set of initial ranges.

7. The apparatus according to claim 6, wherein the first comparison comprises computing a first residual error indicating a difference between the first set of initial ranges and the re-estimated first set of initial ranges; wherein the second comparison comprises computing a second residual error indicating a difference between the second set of initial ranges and the re-estimated second set of initial ranges, the estimation position improvement criterion is a selection of the position associated with a minimized residual error.

8. The apparatus according to any of claims 1-7, further comprising means for:
assigning a set of weights to the set of initial ranges based on a reliability of the set of initial ranges, wherein the first position and the second position are determined further using the weights associated with the first set of initial ranges and with the second set of initial ranges respectively.

9. The apparatus according to claim 8, wherein the position determination operation comprises:
updating the set of weights based on a deviation of at least part of the set of initial ranges from a re-estimated set of initial ranges, when re-estimated using the second position such that the set of weights used in a next execution of the position determination operation is the updated set of weights.

10. The apparatus according to any of claims 7-9, wherein the first residual error is computed as a weighted sum of differences between the first set of initial ranges and the re-estimated first set of initial ranges using the weights associated with the first set of initial ranges; wherein the second residual error is computed as a weighted sum of differences between the second set of initial ranges and the re-estimated second set of initial ranges using the weights associated with the second set of initial ranges.

11. The apparatus according to any of claims 6-10, wherein the estimation of the first position further comprises estimation of a first bias, and the estimation of the second position comprises estimation of a second bias, wherein the first set of initial ranges are re-estimated further using the first bias, and the second set of initial ranges are re-estimated further using the second bias.

12. The apparatus according to any of claims 1-11, wherein the first and second positions are estimated using a Weighted least Squares (WLS) technique.

13. The apparatus according to any of claims 1-12, wherein the set of initial ranges are provided as relative ranges which are determined using Time Difference of Arrival (TDOA) based on a difference in signal arrival times at anchor nodes of the set of anchor nodes and a selected reference anchor node of the set of anchor nodes.

14. The apparatus according to claim 13, the selected reference anchor node being the anchor node associated with the smallest arrival time.

15. A computer-implemented method for determining a position of a device using a set of nodes, referred to as anchor nodes, the method comprising:

providing a set of initial ranges in time or space between the set of anchor nodes and the device;
executing one or more times a position determination operation, the position determination operation comprising:

determining a first set of initial ranges;
estimating a first position of the device using the first set of initial ranges and positions of the corresponding anchor nodes;
estimating a second position of the device using a second set of initial ranges and positions of the corresponding anchor nodes;
providing either the first position or the second position as the device's position based on fulfillment of an estimation position improvement criterion;
wherein the second set of initial ranges is the first set of initial ranges with a predefined reduction in the number of initial ranges; the predefined reduction being a removal of one initial range, wherein the first set of initial ranges is the set of initial ranges in the initial execution of the position determination operation or otherwise is the second set of initial ranges of a last execution of the position determination operation;

wherein the position determination operation is executed until the provision of the position.

Fig. 1

Fig. 2

Providing a set of initial ranges in time or space from the set of
anchor nodes to the device using signals received at the set of
anchor nodes from the device

301

Position determination operation

303

Determining a first set of initial ranges

303A

Estimating a first position of the device using the first set of initial
ranges and positions of the corresponding anchor nodes

303B

Estimating a second position of the device using a second set of
initial ranges and positions of the corresponding anchor nodes,
wherein the second set of initial ranges is the first set of initial
ranges with a predefined reduction in the number of initial ranges;
the predefined reduction being a removal of one initial range

303C

Providing either the first position or the second position as the
device's position based on fulfillment of an estimation position
improvement criterion

303D

# Fig. 3

Fig. 4

EP 4 772 902 A1

Fig. 4(cont.)

EP 4 772 902 A1

Apparatus

1072

TO/FROM
other network
element
entities and
the like

I/O

PROCESSOR/CONTROLLER

1070

1071

MEMORY

1073

Fig. 5

Europäisches
Patentamt
European
Patent Office
Office européen
des brevets

## EUROPEAN SEARCH REPORT

**Application Number**

EP 25 22 1735

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GUO XIANZHEN ET AL: "User-Assisted Networked Sensing in OFDM Cellular Network with Erroneous Anchor Position Information", ICASSP 2024 - 2024 IEEE INTERNATIONAL CONFERENCE ON ACOUSTICS, SPEECH AND SIGNAL PROCESSING (ICASSP) IEEE, 14 April 2024 (2024-04-14), pages 8556-8560, XP034652520, DOI: 10.1109/ICASSP48485.2024.10445920 [retrieved on 2024-03-18] * the whole document * | 1-15 | INV. G01S5/02 G01S5/14 ADD. G01S5/16 G01S5/30 |
| X | US 2021/333352 A1 (THOMPSON STEVEN C [US] ET AL) 28 October 2021 (2021-10-28) | 1,2,6-15 | |
| A | * paragraphs [0033] - [0036] * * paragraphs [0071] - [0079] * * paragraph [0104] * * figures 5, 8 * | 3-5 | |
| X | THURAIAPPAH SATHYAN ET AL: "WASP: A System and Algorithms for Accurate Radio Localization Using Low-Cost Hardware", IEEE TRANSACTIONS ON SYSTEMS, MAN, AND CYBERNETICS: PART C:APPLICATIONS AND REVIEWS. IEEE SERVICE CENTER, PISCATAWAY, NJ., US, vol. 41, no. 2, 1 March 2011 (2011-03-01), pages 211-222, XP011350156, ISSN: 1094-6977, DOI: 10.1109/TSMCC.2010.2051027 * abstract * * chapter "I. Introduction" * * chapter "III. WASP System Overview" * * chapter "IV. WASP Algorithms" * * chapter "V. Localization and Tracking Algorithms" * | 1-15 | TECHNICAL FIELDS SEARCHED (IPC)  G01S |

The present search report has been drawn up for all claims

| Place of search | Date of completion of the search | Examiner |
|---|---|---|
| Munich | 21 May 2026 | Haugg, Sabine |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 22 1735

This annex lists the patent family members relating to the patent documents cited in the above-mentioned European search report.
The members are as contained in the European Patent Office EDP file on
The European Patent Office is in no way liable for these particulars which are merely given for the purpose of information.

21-05-2026

| Patent document cited in search report | Publication date | Patent family member(s) | | Publication date |
|---|---|---|---|---|
| US 2021333352 A1 | 28-10-2021 | US | 2021333352 A1 | 28-10-2021 |
| | | US | 2023333198 A1 | 19-10-2023 |
| | | WO | 2021207707 A2 | 14-10-2021 |

EPO FORM P0459

For more details about this annex : see Official Journal of the European Patent Office, No. 12/82